# EUROPEAN PATENT APPLICATION

(11) **EP 1 640 759 A1**
(43) Date of publication of application: **29.03.2006**
(21) Application number: 05021017.8
(22) Date of filing: 27.09.2005
(51) Int. Cl.: G02B 21/00

(54) **Inverted microscope**

(30) Priority: 27.09.2004 JP 2004280014
(71) Applicant: Olympus Corporation, Tokyo 151-0072 (JP)
(72) Inventor: Kouno, Takayuki, Ina-shi Nagano 369-000 (JP); Aono, Yasushi, Yokohama-shi Kanagawa 226-0003 (JP)
(74) Representative: von Hellfeld, Axel

(57) **Abstract**

An inverted microscope (100; 100'; 100") includes a stage (102) on which a sample is disposed, a support (101x, 101y) which supports the stage (102), a base (101z) which holds the support from below the support, an objective lens (104, 104', 104") which is arranged under the sample and the stage, an imaging lens (125) which is arranged inside the base (101z) and which forms an optical image of the sample in cooperation with the objective lens (104, 104', 104"), and an optical path combining/splitting unit (134; 301; 401) which is arranged on a main optical path between the objective lens (134; 301; 401) and the imaging lens (125) and which detachably holds the optical path combining/splitting element (135; 302; 402) that combines/splits the main optical path inside the base (101z).

## Description

### BACKGROUND OF THE INVENTION

### 1. Field of the Invention

The present invention relates to an inverted microscope which allows observation of a sample disposed on a stage from below via an objective lens.

### 2. Description of the Related Art

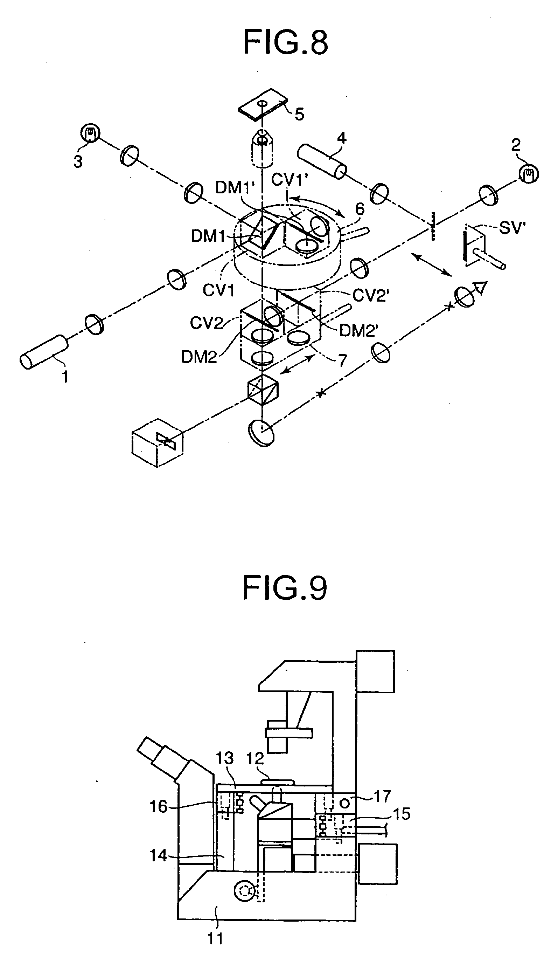

Japanese Patent Application Laid-Open No. H11-223773 discloses an inverted microscope having a plurality of incident lighting optical paths as shown in FIG. 8. An experiment through Caged reagent release is carried out as follows. First, a laser beam emitted from a laser light source 1 for photorelease of Caged reagent is guided through an optical path of a first incident lighting system to a sample 5 via a dichroic mirror DM1 in a cube CV1. Then, through manipulation of a slider SV', a mirror is retracted from an optical axis. An exciting light emitted from a mercury lamp 2 for radiation of the exciting light is guided through an optical path of a third incident lighting system to the sample 5 via a dichroic mirror DM2 in a cube CV2. On the other hand, an experiment with laser trap can be carried out as follows. First, an exciting light emitted from a mercury lamp 3 for radiation of the exciting light is guided through an optical path of a second incident lighting system to the sample 5 via a dichroic mirror DM1' in a cube CV1' by rotation of a turret 6. Then through manipulation of the slider SV', the mirror is arranged on the optical axis. A laser beam emitted from a laser light source 4 for laser trap is guided through an optical path of the third incident lighting system to the sample 5 via a dichroic mirror DM2' in a cube CV2' by movement of a slider 7. The above structure allows for a selective implementation of an experiment of Caged reagent release through Caged release and fluorescent observation on one hand, and a minute observation, measurement or the like through fluorescent observation and laser trap on the other.

Japanese Patent Application Laid-Open No. H11-72715, as shown in FIG. 9, discloses an inverted microscope in which a stage can be repositioned with a spacer for provision of an additional optical system. The disclosed inverted microscope includes a microscope base 11, a stage 13 on which a sample 12 is disposed, and stage supports 14 and 15 that extend from the microscope base 11 to support the stage 13. Spacers 16 and 17 can be inserted between the stage 13 and the stage supports 14 and 15 respectively to widen a space therebetween so that an additional optical system can be arranged and manipulated in the additional space. The above structure allows for an observation by the additional optical system arranged in the inverted microscope, whereby the inverted microscope can be employed for wider purposes.

Japanese Patent Application Laid-Open No. H8-271797 discloses an inverted microscope including a split optical path between a sample and an observer, where an optical path splitter that serves to generate the split optical path is detachable from a side of the microscope. The optical path splitter is embedded at a most suitable position in the inverted microscope from a standpoint of ergonomics, whereby a manipulation thereof can be realized in an ergonomically favorable manner.

Japanese Patent Application Laid-Open No. H11-223773 simply describes a concept of the optical system without teaching or suggesting a specific structure thereof, though a detachable structure of an optical path switcher is intended. For example, the above application does not describe how the optical path switcher is attached and detached when an observer wants to change a manner of observation. Hence, an actual structure of the microscope itself is not clear.

Further, since the apparatus disclosed in Japanese Patent Application Laid-Open No. H11-72715 includes the stage which is repositioned by means of spacers, the apparatus as a whole becomes larger, and hardness of the microscope degrades due to the addition of the optical system. In addition, since the point of focus significantly changes in a direction of an optical axis by the addition of the optical system, an optimal optical performance cannot be given and a viewing field is blurred. Such inconveniences are incurred from difficulties in designing an optimal optical system for two optical paths with different lengths, i.e., optical path lengths from the objective lens to the observer before and after the addition of the optical system.

Further, the apparatus disclosed in Japanese Patent Application Laid-Open No. H8-271797 has only a single split optical path which structure cannot accommodate a wide variety of requests of the observer for observations and experiments.

### SUMMARY OF THE INVENTION

In view of the foregoing, an object of the present invention is to provide an inverted microscope in which plural split optical paths can be selected without degradation of hardness and optical characteristics of the inverted microscope.

According to one aspect of the present invention, an inverted microscope includes a stage on which a sample is disposed; a support which supports the stage; a base which holds the support from below the support; an objective lens which is arranged under the sample and the stage; an imaging lens which is arranged inside the base and which forms an optical image of the sample in cooperation with the objective lens; and an optical path combining/splitting unit which is arranged on a main optical path between the objective lens and the imaging lens and which detachably holds the optical path combining/splitting element that combines/splits the main optical path inside the base.

According to the inverted microscope of the present invention, plural combined/split optical paths can be suitably selected as necessary for use without degradation in hardness and optical characteristics. Thus, an inverted microscope with high versatility can be provided.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a schematic diagram of a microscope according to a first embodiment of the present invention;
FIG. 2A is an enlarged perspective side view of the microscope shown in FIG. 1;
FIG. 2B is a perspective view of a mirror slider for the microscope;
FIG. 2C is a perspective view of a cover for the microscope;
FIG. 2D is a perspective view of a prism slider for the microscope;
FIG. 2E is a perspective view of a cylindrical portion for the microscope;
FIG. 3 is a schematic diagram of an inverted microscope according to a modification of the first embodiment of the present invention;
FIG. 4A is an enlarged perspective side view of the inverted microscope shown in FIG. 3;
FIG. 4B is a perspective view of a mirror slider for the inverted microscope;
FIG. 4C is a perspective view of a cover for the inverted microscope;
FIG. 5 is a detailed perspective view of a mount shown in FIG. 4;
FIG. 6 is a schematic diagram of an inverted microscope according to a second embodiment of the present invention;
FIG. 7A is a back view of the inverted microscope shown in FIG. 6;
FIG. 7B is a front view of a mirror slider for the inverted microscope shown in FIG. 6;
FIG. 7C is a front view of a cover for the inverted microscope shown in FIG. 6;
FIG. 8 is a schematic diagram of an inverted microscope disclosed in Japanese Patent Application Laid-Open No. H11-223773;
FIG. 9 is a schematic diagram of an inverted microscope disclosed in Japanese Patent Application Laid-Open No. H11-72715.
FIG. 10 is a schematic diagram of a click mechanism that engages with a click groove in a base of the microscope according to the first embodiment of the present invention; and
FIG. 11 is a perspective view of an example of an image modulation unit according to a modification of the first embodiment.

### DETAILED DESCRIPTION OF THE PREFERRED EMBODIMENTS

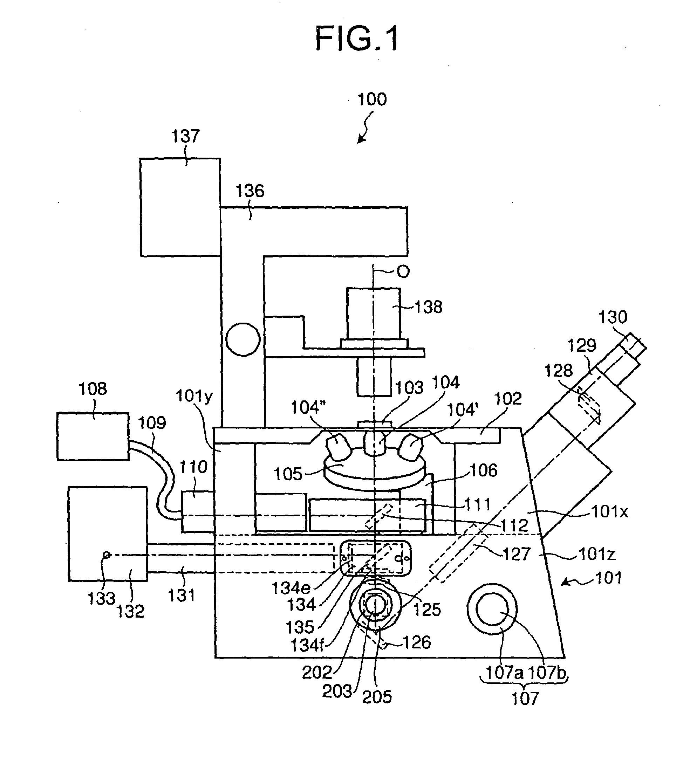

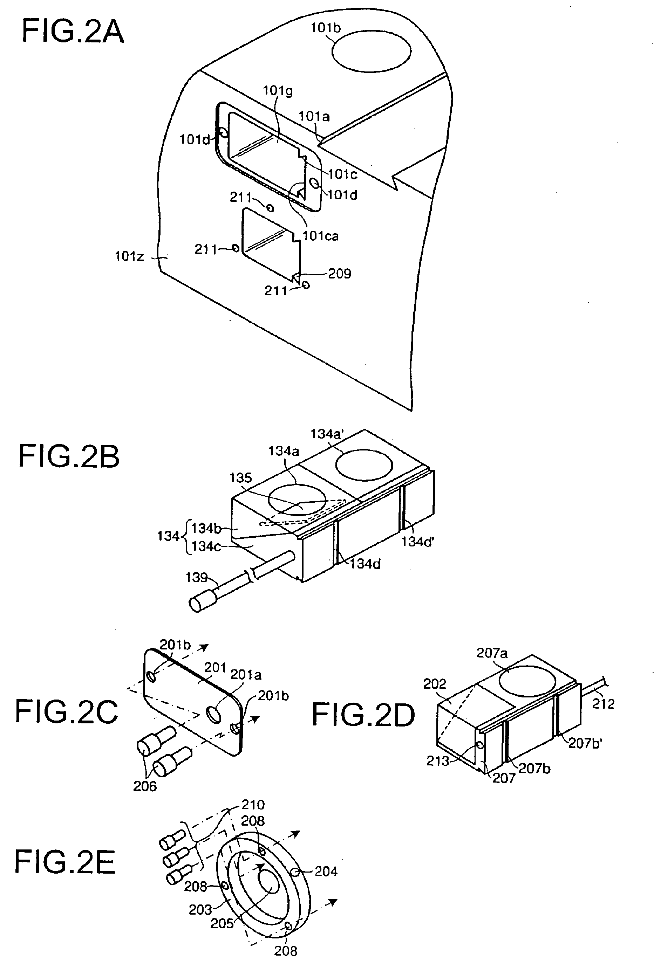

A first embodiment of the present invention will now be described with reference to FIGS. 1 and 2. FIG. 1 is a schematic diagram of a microscope according to the first embodiment of the present invention. FIGS. 2A is an enlarged perspective side view of the microscope shown in FIG. 1, and FIGS. 2B to 2E are perspective views of elements for the microscope shown in FIG. 1.

In FIG. 1, an inverted microscope 100 includes a microscope main housing 101, and a stage 102 on which a sample 103 is disposed. The microscope main housing 101 is integral with supports 101x and 101y which support the stage 102, and a base 101z which holds the respective supports 101x and 101y from below the supports 101x and 101y. The base 101z is a casing which respective side surfaces are formed from thick side walls thicker than a predetermined thickness, and formed hard as to have a higher hardness than a predetermined hardness as its entirety. The base 101z may be provided with a rib in place of thick side walls in order to secure an overall hardness.

The stage 102 is fixed to the supports 101x and 101y, and the sample 103 is disposed on the stage 102. A rotatable revolver 105 is arranged under the stage 102. The revolver 105 is capable of holding a plurality of objective lenses, for example, three objective lenses 104, 104', and 104". With rotation of the revolver 105, one of the objective lenses 104, 104', and 104" (objective lens 104 in FIG. 1) is selectively arranged on an optical axis O below the sample 103.

A revolver holder 106 holds the revolver 105. The revolver holder 106 is connected to a focus adjustment dial 107 via a rack-and-pinion mechanism (not shown) inside the base 101z so that a rotating movement of the focus adjustment dial 107 is converted into a linear movement of the revolver holder 106 along the direction of the optical axis O. The focus adjustment dial 107 is provided with a coarse adjustment knob 107a and a fine adjustment knob 107b arranged on a common axis, in order to realize focusing on the sample 103 as intended by an observer.

A lamp housing 132 incorporates a light source 133. The lamp housing 132 is held by a projection tube 131, which is detachably fixed to the base 101z. A light beam emitted from the light source 133 passes through the projection tube 131 to reach an exciting filter 134e in a mirror slider 134 arranged inside the base 101z and intersects the optical axis O. Thereafter, the light beam is reflected by a dichroic mirror 135 detachably fixed to the mirror slider 134 and incident on the sample 103. A part of the light beam coming out from the sample 103 passes through the objective lens 104 and becomes a parallel pencil, which is further guided through an absorption filter 134f and an imaging lens 125 to be reflected by a mirror 126. Then, the reflected light beam passes through a group of relay lenses 127 inside the base 101z and a prism 128 arranged inside a lens barrel 129. Finally, the light beam is observed through an eyepiece 130. The exciting filter 134e and the absorption filter 134f are detachable from the mirror slider 134 by screws (not shown).

A projection tube 110 is detachably fixed to the support 101y. A laser oscillator 108 is connected to the projection tube 110 via a fiber 109. A laser beam emitted from the laser oscillator 108 passes through the projection tube 110 via the fiber 109 and intersects the optical axis O inside a mirror unit 111 arranged under the revolver 105. Thereafter, the laser beam is reflected by a dichroic mirror 112 detachably fixed to the mirror unit 111 and incident on the sample 103. The dichroic mirror 112 is rotatable inside the mirror unit 111 by means of a turret and can be positioned on and off the optical axis O. The dichroic mirror 112 has a characteristic of transmitting an exciting light reflected by the dichroic mirror 135 and all fluorescence transmitted through the dichroic mirror 135.

Further, the inverted microscope 100 includes a pillar 136 for transmissive lighting, a lamp housing 137, and a condenser 138. A light beam coming out from the lamp housing 137 is deflected by a mirror (not shown) in the pillar 136 by 90 degrees. The deflected light beam passes through the condenser 138 and becomes incident on the sample 103. Similarly as described above, a part of the light beam coming out from the sample 103 is turned into a parallel pencil by the objective lens 104 and passes through the imaging lens 125. Thereafter, the light beam is reflected by the mirror 126, passes through the group of relay lenses 127 inside the mirror body and the prism 128 arranged inside the lens barrel 129. Finally, the light beam is observed through the eyepiece 130.

The base 101z shown in FIG. 2A has a dovetail groove 101a for detachable fixation of the mirror unit 111 thereto by a screw (not shown), and a hole 101b through which the optical axis O penetrates. Further, the base 101z has a dovetail groove 101c for detachable fixation of the mirror slider 134 thereto, and a tap 101d for detachable fixation of a cover 201 thereto with screws 206 put through holes 201b (see FIG. 2C). Referring to FIG. 2B, the mirror slider 134 has holes 134a and 134a' through which a light beam that passes through the objective lens 104 is transmitted. The mirror slider 134 is formed from a slider 134b and a slider 134c separable from each other for attachment and detachment of the dichroic mirror 135. The slider 134b and the slider 134c are fixed by screws (not shown).

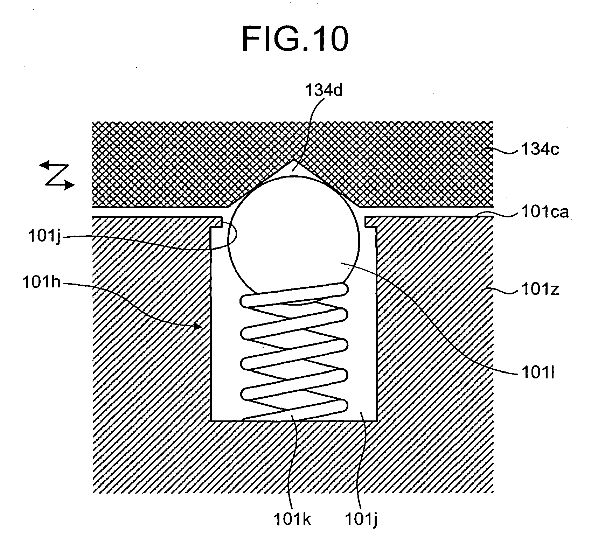

The slider 134c has click grooves 134d and 134d'. When the slider 134c is inserted into the base 101z along the dovetail groove 101c, the click grooves 134d and 134d' engage with a click mechanism 101h (see FIG. 10) provided in the base 101z as an alignment mechanism. Thus, the dichroic mirror 135 can be properly aligned with respect to the optical axis O. Here, the click mechanism 101h is provided in the base 101z so that the click mechanism 101h faces with the groove 134d when the dichroic mirror 135 is arranged on the optical axis, for example, as shown in FIG. 10. The click mechanism 101h is formed with an opening 101i provided on a guide surface 101ca of the dovetail groove 101c, a spring 101k which serves as a resilient body fixed to an opposing surface to the opening 101i inside a space 101j provided inside the opening 101i, and a spherical ball 101 l held at a free end of the spring 101k. The ball 101 l is larger in diameter than the opening 101i, and protrudes a head portion thereof on an opposite side to a side attached to the spring 101k by a predetermined amount according to a spring force of the spring 101k. The click mechanism 101h determines a position of the dichroic mirror 135 relative to the optical axis O by engagement of the ball 101l in the groove 134d when the mirror slider 134 is mounted along the dovetail groove 101c.

The mirror slider 134 does not have an optical element such as a mirror or a prism on sides where the hole 134a' and the click groove 134d' are provided, respectively. Thus, the hole 134a' serves as a transmission hole where the light from the objective lens passes through as it is. A position of the hole 134a' relative to the optical axis O is determined by the engagement of the click groove 134d' and the click mechanism 101h. A tip end of a knob 139 is threaded, so that the knob 139 is detachable from a threaded portion of the slider 134c. When the mirror slider 134 is mounted to the base 101z, the knob 139 is temporarily removed from the slider 134c, the cover 201 is fixed to the slider 134c via the screws 206, and the knob 139 is fixed to the slider 134c again. When the mirror slider 134 is removed from the base 101z, the above operation is performed in a reverse order. The observer manipulates the knob 139 at switching of the dichroic mirror 135.

The base 101z allows projection of light passing through the objective lens 104 through a hole 205 via a prism 202 in a direction perpendicular to the page of FIG. 1 toward you (hereinafter, "forward direction of FIG. 1"). For the light projection, the base 101z has a dovetail groove 209 for detachable fixation of a prism slider 207, and taps 211 for fixation of screws 210 through holes 208 in a cylindrical portion 203 (see FIG. 2E). The cylindrical portion 203 can fixedly hold a camera such as a charge coupled device (CCD) and is provided with a screw 204 for fixation of the camera. The prism 202 is arranged on the prism slider 207, and the prism slider 207 is provided with a hole 207a where the light beam from the objective lens 104 passes through (see FIG. 2D). The prism slider 207 is further provided with grooves 207b and 207b.' Through a manipulation of a knob 212 protruding outside the base 101z via a hole (not shown), the prism 202 can be positioned on and off the optical axis O. The prism slider 207 has a tap 213 to facilitate attachment to and detachment from the base 101z. A tip end of the knob 212 is threaded which is detachable from a threaded portion (not shown) in the prism slider 207. When the prism slider 207 is mounted on the base 101z, the knob 212 is temporarily removed from the base 101z and fixed to the tap 213. Then, via a manipulation of the knob 212, the prism slider 207 is inserted into the base 101z from a forward direction of FIG. 1. Then, after removal of the knob 212, the cylindrical portion 203 is fixed by the screws 210, and the knob 212 is fixed again from a backward direction of the page of FIG. 1. When the prism slider 207 is removed, the above operation is performed in a reverse order. The observer uses the knob 212 for placing the prism 202 on and off the optical axis O, as described above. In other words, the observer can attach an optical element other than the prism 202 to the base 101z with the removal of the cylindrical portion 203 from the base 101z.

As can be seen from above, in the inverted microscope 100 of the first embodiment, the dichroic mirror 135 and the dichroic mirror 112 respectively function as an optical path combining/splitting element which combines an optical path with a main optical path and splits the main optical path extending along the optical axis O between the objective lens 104 and the imaging lens 125. The imaging lens 125 is an optical element that serves to form an optical image of the sample 103 in cooperation with the objective lens 104. With the objective lens 104 transmitting the light from various points on the sample 103 as parallel light beams, the main optical path between the objective lens 104 and the imaging lens 125 is formed as a path for parallel light. The dichroic mirror 135 and the dichroic mirror 112 are positioned on and off the optical axis O between the objective lens 104 and the imaging lens 125, respectively. The projection tube 131 and the projection tube 110 serve as an optical path combining/splitting unit that can be connected to the combined/split optical paths formed respectively by the dichroic mirror 135 and the dichroic mirror 112, and that can be inserted into and removed from the base 101z. The projection tubes 131 and 110 are introduced into the main optical path without need of a change in the position of the sample 103 along the optical axis O. The dichroic mirror 135 combines/splits the main optical path in a direction from inside the base 101z towards outside the base 101z, whereby the combined/split optical path formed by the dichroic mirror 135 reaches outside the base 101z through inside the base 101z.

The mirror slider 134 functions as an optical path combining/splitting unit that holds the dichroic mirror 135 inside the base 101z as to allow insertion and removal of the dichroic mirror 135. The dovetail groove 101c functions as a guide to define a direction of insertion and removal of the dichroic mirror 135 on the optical axis O. The mirror slider 134 is attached to and detached from the base 101z through an opening 101g provided on a side surface of the base 101z as to communicate inside and outside the base 101z, thereby allowing the insertion into and the removal from the main optical path of the dichroic mirror 135.

On observation with the microscope, the observer retracts the dichroic mirror 112 from the optical axis O through a manipulation of the mirror unit 111, and retracts the prism 202 from the optical axis, thereby allowing the projection of an image of the sample 103 on the eyepiece 130. The light beam emitted from the light source 133 is deflected by the dichroic mirror 135 positioned on the optical axis O through a manipulation of the knob 139, passes through the objective lens 104 and is incident on the sample 103. Here, the mirror slider 134 is secured by the click groove 134d and the click mechanism 101h. Then, the fluorescence excited on the sample 103 passes through the objective lens 104, the imaging lens 125, the mirror 126, the group of relay lenses 127, and the prism 128, to be observed through the eyepiece 130. When the sample 103 is not in a focal position the observer desires, the observer adjusts focusing through a manipulation of the coarse adjustment knob 107a and the fine adjustment knob 107b of the focus adjustment dial 107. On the other hand, when photo-manipulation is required, the observer inserts the dichroic mirror 112 onto the optical axis O through manipulation of the mirror unit 111. The laser beam emitted from the laser oscillator 108 passes through the fiber 109 and the projection tube 110 to be deflected by the dichroic mirror 112 and is incident on the sample 103 through the objective lens 104. Here, since the dichroic mirror 112 has a characteristic of transmitting the exciting light from the light source 133 and the fluorescence generated by the radiation of the exciting light, the observation is not obstructed at all.

Contrarily, when the light from the light source 133 is not employed for the observation and the laser beam alone from the laser oscillator 108 is employed, the dichroic mirror 135 is retracted from the optical axis O via a manipulation of the knob 139. Here, the mirror slider 134 is secured by the click groove 134d' and the click mechanism 101h. When the split optical path is not required to be formed by the mirror slider 134 from the beginning, the mirror slider 134 may be removed from the base 101z altogether. Since not only the dichroic mirror 112 but also an exciting filter and an absorption filter are each detachable from the mirror unit 111, which can be positioned on and off the optical axis O, fluorescent observation with various types of exciting light is allowed. For the fluorescent observation, the mirror unit 111 is temporarily removed from the base 101z and the exciting filter and the absorption filter are attached to the base 101z. Thereafter the mirror unit 111 is mounted onto the base 101z again. Needless to say, the light sources forming the two split optical paths are not necessarily one laser oscillator and one lamp housing, respectively, and various lightings and combination thereof are employable at discretion of the observer. When two lamp housings are employed, the projection tubes may be structured as to bend towards the forward direction of FIG. 1, so that the two lamp housings do not interfere with each other.

Further, when both the dichroic mirror 112 and the dichroic mirror 135 are retracted from the optical axis O, and the lamp housing is powered on, an observation with transmissive lighting is allowed.

In every observation manner described above, the disposition of the prism 202 on the optical axis O through the manipulation of the knob 212 allows photographing of the image of the sample 103 with a camera attached to the cylindrical portion 203. Here, the prism slider 207 is secured by the groove 207b and the click mechanism (not shown) of the base 101z. On the other hand, when the observation is not made with the camera fixed to the cylindrical portion 203, the prism 202 is retracted from the optical axis O through the manipulation of the knob 212. Here, the prism slider 207 is secured with the groove 207b' and the click mechanism (not shown) of the base 101z, and a hole 207a is arranged on the optical axis O. When the prism slider 207 is removed from the base 101z, the knob 212 is temporarily removed from the base 101z and fixed to the tap 213 of the prism slider 207 so that the knob 212 can be used for pulling out the prism slider 207 from the base 101z. Such structure is intended to facilitate detachment and attachment of the element. With the change in transmissivity of the prism 202 of the prism slider 207, the observer can select whether to perform a simultaneous observation with the eyepiece 130 and the camera or an observation with the camera alone.

According to the first embodiment as described above, no matter whether one combined/split optical path is employed corresponding to the main optical path running from the objective lens to the imaging lens, or plural combined/split optical paths are employed, the height of the stage and the distance between the imaging lens and the objective lens do not change. Hence, the hardness and the optical characteristics of the microscope itself are not degraded. Further, since the optical path combining/splitting elements can be detached from and attached to the base via the side surface thereof, a microscope with high versatility can be provided to the user. In other words, an inverted microscope which allows selection of a combined/split optical path by the observer depending on a purpose of use without degradation in the hardness and the optical characteristics thereof can be provided.

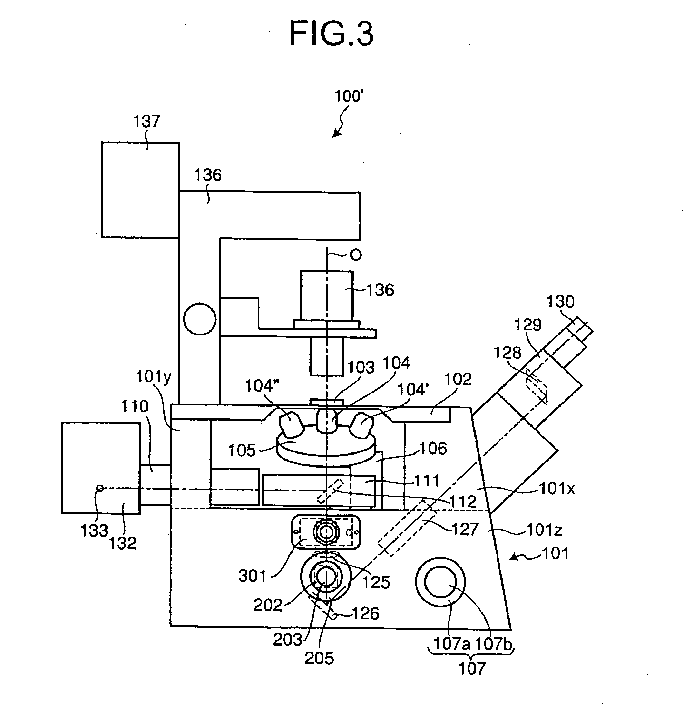

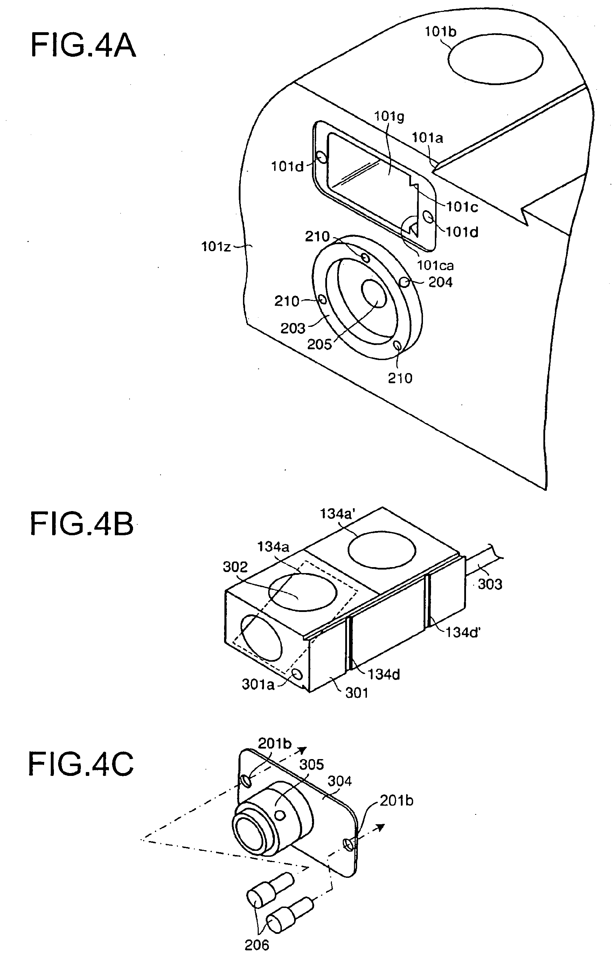

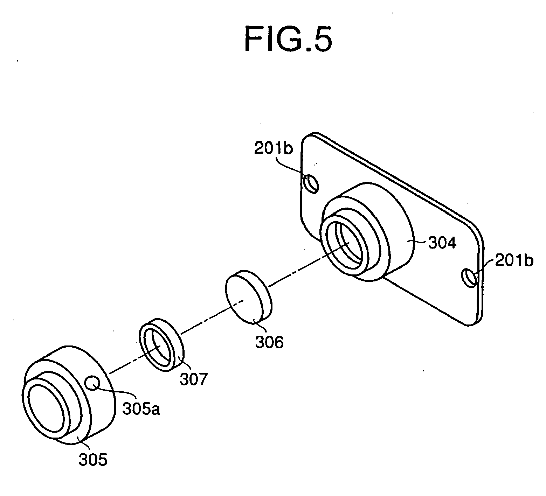

Next, a modification of the first embodiment will be described with reference to FIGS. 3, 4, and 5. FIG. 3 schematically shows an inverted microscope according to the modification of the first embodiment of the present invention. FIG. 4A is an enlarged perspective side view of the inverted microscope of FIG. 3, and FIGS. 4B and 4C are perspective views of elements for the inverted microscope shown in FIG. 3. FIG. 5 is a detailed exploded view of a mount of FIG. 4C. In the following description of the modification, since the microscope main housing 101, the stage 102, the sample 103 or the like are same as those in the first embodiment, the description thereof will not be repeated.

In an inverted microscope 100' of the modification, as shown in FIG. 3, the lamp housing 132 is attached to the projection tube 110. Further, as shown in FIG. 4B, to the dovetail groove 101c, a mirror slider 301 is detachably attached in place of the mirror slider 134. A mirror 302 is detachably arranged in the mirror slider 301. A knob 303 for the manipulation of the mirror slider 301 is provided on an opposite side to the position of the knob 139 in the first embodiment and is arranged outside the base 101z through a hole (not shown). When the mirror slider 301 is mounted onto the base 101z, the knob 303 is temporarily removed and fixed to a tap 301a, and the mirror slider 301 is inserted into the base 101z via the manipulation of the knob 303. Thereafter, the knob 303 is removed from the mirror slider 301, and fixed again to the mirror slider 301 through a hole (not shown) in the base 101z. Referring to FIG. 4C, a cover 304 can secure a mount 305 in a rotatable and axially movable manner with a screw 305a. Further, as shown in FIG. 5, an imaging lens 306 is detachably fixed to the cover 304 with a screw 307 for an acquisition of incoming/outgoing incident light to/from the combined/split optical path.

In the modification, the mirror 302 functions as an optical path combining/splitting element that forms a combined/split optical path from the main optical path, the mirror slider 301 functions as an optical path combining/splitting unit that detachably holds the mirror 302, and the dovetail groove 101c functions as a guide that defines a direction of insertion and removal of the mirror 302 to the optical axis O. The mirror slider 301 is attached to and removed from the base 101z through the opening 101g provided on a side surface of the base 101z, and the mirror 302 is inserted into and removed from the optical axis O between the objective lens 104 and the imaging lens 125. The combined/split optical path formed by the mirror 302 is introduced into the main optical path without the need of change in the position of the sample 103 along the optical axis O.

When photographing is desired, a camera and the cover 304 are first fixed to the mount 305 that serves as an attachment unit, which is then fixed to the base 101z. Thereafter, the dichroic mirror 112 is arranged on the optical axis O through a manipulation of the mirror unit 111 and the observation is carried out via the eyepiece 130 with the use of lighting from the light source 133. Then, the mirror 302 is arranged on the optical axis O through a manipulation of the knob 303. Adjustment of the directions of rotation and focusing of the camera is realized through temporarily unfastening the screw 305a, moving the mount 305 and the camera, and fixing the same at a desired position with the screw 305a. When the observation is carried out with the eyepiece 130 or with the camera attached to the cylindrical portion 203, the mirror 302 is retracted from the optical axis O through the manipulation of the knob 303.

When acquisition of a laser confocal image is desired, the mount 305 fixed on the cover 304 is removed, the imaging lens 306 is detached through unfastening of the screw 307, and a laser confocal apparatus is attached to the mount 305 and in turn to the cover 304. Then, similarly to the above-described manner, the observation is carried out with the manipulation of the knob 303. When an attachment of a peripheral unit, such as a camera, to the mount is not required from the beginning, the mirror slider 301 and the knob 303 may be eliminated from the base 101z altogether.

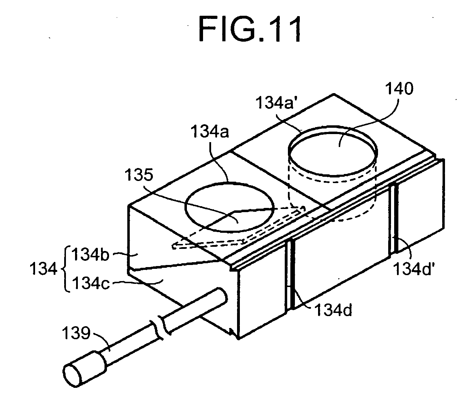

In the modification of the first embodiment, similarly to the first embodiment, since the height of the stage and the distance between the imaging lens and the objective lens do not change no matter whether one combined/split optical path is employed or plural combined/split optical paths are employed, the hardness and the optical characteristics of the microscope itself are not degraded. Further, when the mirror on the mirror slider is a dichroic mirror, photographing such as a ratio imaging can be carried out with plural cameras, whereby a microscope with high versatility can be provided to the user. Further to the above-described modification, the first embodiment can be modified as far as an optical path combining/splitting element that forms the combined/split optical path without reconstruction of the microscope can be inserted into and removed from the base 101z from the side surface. For example, the mirror slider may be electrically driven to improve the throughput of experiments. Alternatively, the combined/split optical path from the mirror slider and the split optical path from the prism and the cylindrical portion, may be arranged alternately on right side and left side of the inverted microscope to allow incorporation of a larger peripheral unit. Further, when the mount is attached to a back side of the base 101z at a height of the prism slider, and the reflecting surface of the prism is modified as to emit incident light from the objective lens, another combined/split optical path can be formed on the back side of the base 101z. Further, depending on the request of the user, a pupil modulation unit provided with a light modulation member having a function of pupil modulation, or an image modulation unit provided with an optical modulation member having a function of image modulation to modulate an imaging magnification of an optical image of the sample 103 may be further provided in place of the mirror slider. The image modulation unit, as shown in FIG. 11, for example, can be structured as a group of image modulation lenses 140 constituted from a group of lenses provided in the hole 134a' employed as a transmitting hole for the mirror slider 134 that serves as an optical path combining/splitting unit. Thus, the dichroic mirror 135 and the group of image modulation lenses 140 can be selectively positioned on the main optical path.

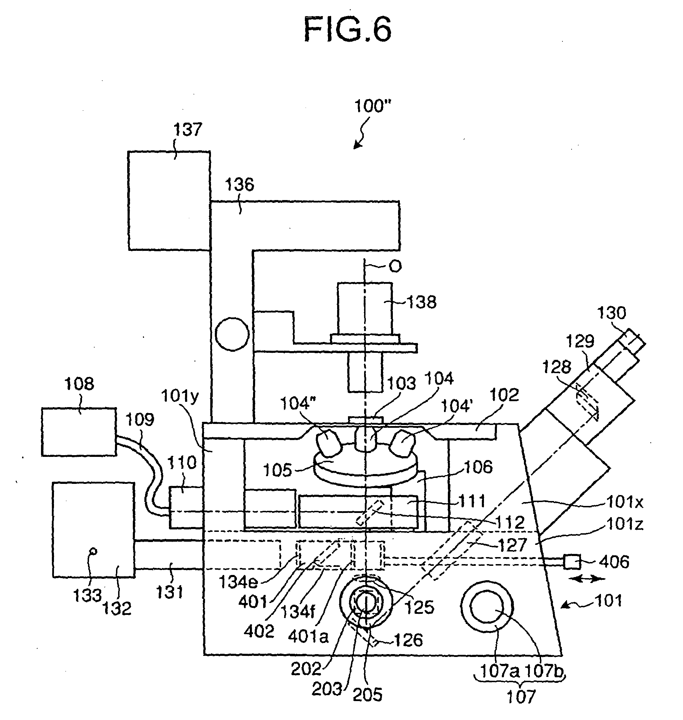

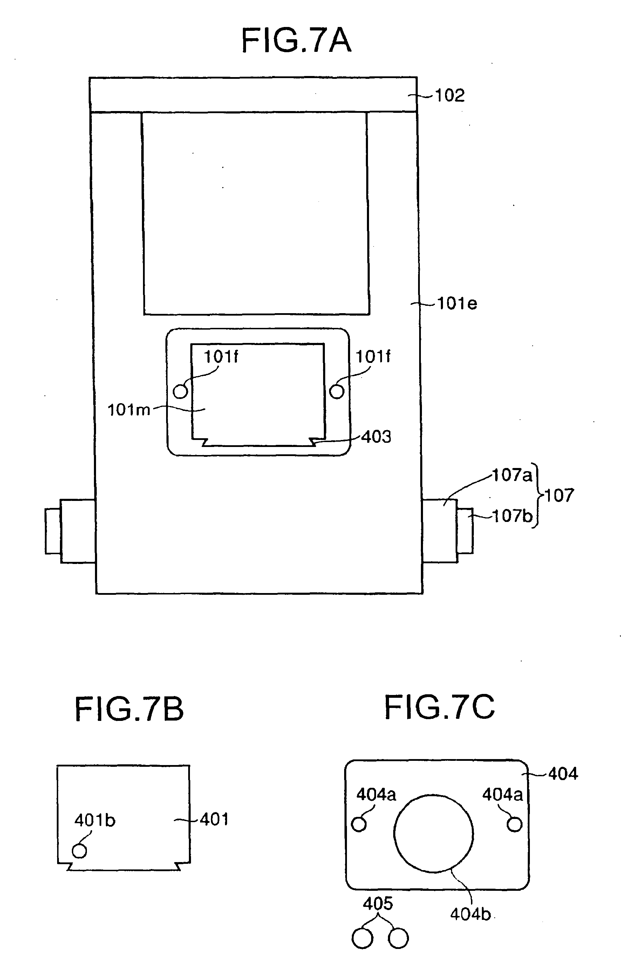

Hereinbelow, a second embodiment of the present invention will be described with reference to FIGS. 6 and 7. FIG. 6 schematically shows an inverted microscope according to the second embodiment of the present invention. FIG. 7A is a back view of the inverted microscope shown in FIG. 6, and FIGS. 7B and 7C are front views of elements for the inverted microscope shown in FIG. 6. In the description of the second embodiment below, since the microscope main housing 101, the stage 102, the sample 103 and the like are same with those in the first embodiment, the description thereof will not be repeated.

In an inverted microscope 100" according to the second embodiment, a dovetail groove 403 is formed for detachable fixation of a mirror slider 401 on a back side 101e of the base 101z, as shown in FIG. 7A. A dichroic mirror 402 is detachably fixed to the mirror slider 401, which can be detached from and attached to the base 101a along the dovetail groove 403. The dovetail groove 403 is arranged at a deep position inside the microscope main housing 101 through the back side 101e and arranged as not to hamper the attachment and detachment of the projection tube 131. The dichroic mirror 402 can be switched and positioned by the click mechanism 101h (not shown) of the base 101z and the mirror slider 401 through the manipulation of a knob 406. When the dichroic mirror 402 is not arranged on the optical axis O, a hole 401a transmitting a light beam from the objective lens 104 is arranged on the optical axis O as shown in FIG. 6. The knob 406 is arranged at a position not to interfere with the group of relay lenses 127. A tip end of the knob 406 is threaded to allow detachment from and attachment to a threaded portion (not shown) of the mirror slider 401. When the mirror slider 401 is attached to the base 101z, the knob 406 is temporarily removed and fixed to a tap 401b for manipulation, and the mirror slider 401 is attached to the microscope main housing 101 with the use of the knob 406. Thereafter, the knob 406 is removed and inserted through a hole (not shown) of the base 101z to be fixed to the mirror slider 401. Further, after the fixation of the mirror slider 401 to the base 101z, a cover 404 is fixed to prevent dust from entering. Referring to FIG. 7C, the cover 404 is fixed to the base 101z with the use of threaded holes 101f of the base 101z with screws 405 penetrating holes 404a. At a central portion of the cover 404 where a light beam from the projection tube 131 passes through, provided is a hole 404b which is closed with a tip end of the projection tube 131 abutting thereto. In the second embodiment, the dichroic mirror 402 constitutes a optical path combining/splitting element for forming a combined/split optical path from the main optical path, the mirror slider 401 functions as an optical path combining/splitting unit that holds the dichroic mirror 402, and the dovetail groove 403 functions as a guide that defines a direction of insertion and removal of the dichroic mirror 402 with respect to the optical axis O. The mirror slider 401 is attached to and detached from the base 101z via an opening 101m provided on a back side which is one surface of the base 101z, and the dichroic mirror 402 is positioned on and off the optical axis O between the objective lens 104 and the imaging lens 125. The projection tube 131 which serves as an optical path combining/splitting unit that can be connected to the combined/split optical path formed by the dichroic mirror 402 and that can be inserted into and removed from the base 101z is introduced into the main optical path without the need of change of the position of the sample 103 along the optical axis O. In the above description, the "side surface" includes a front surface and a back surface other than a right and a left surface when the apparatus is viewed from a front thereof.

At observation, similarly to the first embodiment, the dichroic mirror 112 is first retracted from the optical axis O through the manipulation of the mirror unit 111, and then, the prism 202 is switched and the dichroic mirror 402 is positioned on the optical axis O through the manipulation of the knob 406 which acts on the mirror slider 401. The light beam emitted from the light source 133 is deflected by the dichroic mirror 402 and passes through the objective lens 104 to be incident on the sample 103. Here, the mirror slider 401 is secured by a click groove (not shown) and the click mechanism 101h (not shown) of the base 101z. The observer can perform observation through the eyepiece 130 with the use of the irradiation of light from the light source. When the light source 133 is not employed for the observation, the dichroic mirror 402 may be retracted from the optical axis O through the manipulation of the knob 406. Further, similarly to the first embodiment, when photo-manipulation is desired, the dichroic mirror 112 is inserted onto the optical axis O, whereas when photographing is desired, the prism 202 is inserted onto the optical axis O. When the combined/split optical path of the mirror slider 401 is not employed from the beginning, the mirror slider 401 may be eliminated from the base 101z altogether.

According to the second embodiment as described above, no matter whether one combined/split optical path is employed or plural combined/split optical paths are employed, the height of the stage and the distance between the imaging lens and the objective lens do not change at all, whereby the degradation of the hardness and the optical characteristics of the microscope itself can be prevented. Further, with the disposition of a manipulation unit at a side of the observer, a throughput of the experiments can be improved.

The present invention is not limited to the embodiments as described above. As far as the optical path combining/splitting element that forms the combined/split optical path without reconstruction of the microscope can be attached to and detached from the base 101z from a side surface thereof, the optical path combining/splitting element may be structured as to be attached to and detached from a side of the observer as to improve the handling of the optical path combining/splitting element.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. An inverted microscope (100; 100'; 100") comprising:
a stage (102) on which a sample is disposed;
a support (101x, 101y) which supports the stage (102);
a base (101z) which holds the support (101x, 101y) from below the support (101x, 101y);
an objective lens (104, 104', 104") which is arranged under the sample and
the stage (102);
an imaging lens (125) which is arranged inside the base (101z) and which forms an optical image of the sample in cooperation with the objective lens (104, 104', 104"); and
an optical path combining/splitting unit (134; 301; 401) which is arranged on a main optical path between the objective lens (104, 104', 104") and the imaging lens (125) and which detachably holds an optical path combining/splitting element (135; 302; 402) that combines/splits the main optical path inside the base (101z).

2. The inverted microscope (100; 100'; 100") according to claim 1, wherein the optical path combining/splitting unit (134; 301; 401) combines/splits the main optical path towards an outer direction of the base when the optical path combining/splitting element (135; 302; 402) is positioned on the main optical path.

3. The inverted microscope (100; 100'; 100") according to claim 2, wherein the outer direction of the base (101z) is perpendicular to the main optical path.

4. The inverted microscope (100; 100'; 100") according to claim 1, further comprising an optical path combining/splitting unit (207) which is connectable to a combined/split optical path formed by the optical path combining/splitting element (135; 302; 402) and which is detachable to the base (101z).

5. The inverted microscope (100; 100'; 100") according to claim 1, wherein
the base (101z) has an opening (101g) which communicates inside and
outside thereof on a side surface thereof; and
the optical path combining/splitting element (135; 302; 402) in the optical path combining/splitting unit (134; 301; 401) is inserted into/removed from the main optical path via the opening (101g).

6. The inverted microscope (100; 100'; 100") according to claim 1, wherein
the optical path combining/splitting unit (134; 301; 401) has at least one of a hole (134a') that transmits light from the objective lens, and a light modulation element (140) that modulates the light side by side with the optical path combining/splitting element, and
the optical path combining/splitting element (135; 302; 402), at least one of the hole (134a') and the light modulation element (140) are interchangeably arranged on the main optical path.

7. The inverted microscope (100; 100'; 100") according to claim 6, wherein the light modulation element (140) has an image modulation function according to which an imaging magnification of the optical image is modulated.

8. The inverted microscope (100; 100'; 100'') according to claim 1, wherein the base includes a guide (101c) which defines a direction of insertion and removal of the optical path combining/splitting element (135; 302; 402) by the optical path combining/splitting unit (134; 301; 401).

9. The inverted microscope (100; 100'; 100") according to claim 8, wherein the guide (101c) is a dovetail groove.

10. The inverted microscope (100; 100'; 100") according to claim 1, wherein the base (101z) includes an alignment mechanism that defines a position of the optical path combining/splitting element (135; 302; 402) at insertion and removal of the optical path combining/splitting unit (134; 301; 401).

11. The inverted microscope (100; 100'; 100") according to claim 1, wherein
the base (101z) includes a cover (201; 304; 404) which covers an opening (101g; 101m) that communicates inside and outside of the base (101z) on a side surface of the base (101z), and
the cover (201; 304; 404) includes one of a member that acquires incoming/outgoing incident light to/from a combined/split optical path formed by the optical path combining/splitting element (135; 302; 402), and a member that serves to attach an element to the base (101z).

12. The inverted microscope (100; 100'; 100") according to claim 1, wherein
the optical path combining/splitting element (135; 302; 402) and the optical path combining/splitting unit (134; 301; 401) are plural in number, respectively, and
the plural optical path combining/splitting elements (135; 302; 402) and the plural optical path combining/splitting unit (134; 301; 401) can be simultaneously inserted into and removed from the main optical path between the objective lens (104, 104', 104") and the imaging lens at vertically displaced positions from each other.

13. The inverted microscope (100; 100'; 100") according to claim 1, wherein the objective lens (104, 104', 104") passes light from respective points on the sample as parallel light.

14. The inverted microscope (100; 100'; 100") according to claim 1, wherein
a second optical path combining/splitting element (112) and a second optical path combining/splitting unit (111) can be further arranged between an upper outer portion of the base (101z) and the objective lens (104, 104', 104").
